# EUROPEAN PATENT SPECIFICATION

(11) **EP 1 838 039 B1**
(45) Date of publication and mention of the grant of the patent: **31.10.2012**
(21) Application number: 05825823.7
(22) Date of filing: 30.12.2005
(51) Int. Cl.: H04Q 3/00, H04L 29/08, H04L 12/26, H04L 12/56

(54) **AN IMPLEMENTING METHOD OF MULTIPLE SERVICE FLOWS RESOURCE APPLICATION**
IMPLEMENTIERUNGSVERFAHREN EINER RESSOURCENANWENDUNG MIT MEHREREN DIENSTFLÜSSEN
PROCEDE DE MISE EN OEUVRE D'UNE APPLICATION DE RESSOURCES A FLUX DE SERVICE MULTIPLES

(30) Priority: 12.01.2005 CN 200510001939
(43) Date of publication of application: 26.09.2007
(73) Proprietor: Huawei Technologies Co., Ltd., Longgang District, Shenzhen Guangdong 518129 (CN)
(72) Inventor: XU, Bo Huawei Adm. Bldg. IP Dept., Shenzhen, Guangdong 518129 (CN); CHEN, Yuepeng, Shenzhen, Guangdong 518129 (CN); FAN, Lingyuan, Shenzhen, Guangdong 518129 (CN); WU, Dengchao Huawei Adm. Bldg. IP Dept., Shenzhen, Guangdong 518129 (CN); LV, Zhenzhu, Shenzhen, Guangdong 518129 (CN)
(74) Representative: Kreuz, Georg Maria
(86) International application number: PCT/CN2005/002392
(87) International publication number: WO 2006/074593

(56) References cited:
- WO-A-99/30450
- WO-A2-2004/023743
- CN-A- 1 595 892
- CN-A- 1 601 966
- CN-A- 1 710 904
- US-A- 6 094 424
- US-A1- 2004 215 817
- "NGN Functional Architecture; Resource and Admission Control Subsystem (RACS); Release 1; Draft ETSI ES 2XX XXX" ETSI STANDARDS, EUROPEAN TELECOMMUNICATIONS STANDARDS INSTITUTE, SOPHIA-ANTIPO, FR, no. V 120, December 2004 (2004-12), XP014021281 ISSN: 0000-0001

## Description

### Field of the Invention

The invention relates to the field of network communications, and in particular, to a method for implementing resource applications of multiple service flows.

### Background of the Invention

With the development of the Internet techniques and the increase of user requirements, a variety of multimedia services emerge. The multimedia services appearing in the network may occupy a lot of bandwidth resources. Consequently, the appearance of the services such as a File Transfer Protocol (FTP) service of high burst level or a Hyper Text Transfer Protocol (HTTP) service containing an image file in the network may have a significant effect on the real time services sensitive to transmission delay, delay jittering and the like, which may results in unreliable transmission of critical services in the network. In view of this, various Quality of Service (QoS) techniques are presented. The Internet Engineering Task Force (IETF) has developed many service models and mechanisms to meet the QoS requirements.

At present, in most applications, an integrated service (Int-Serv) model is utilized at the access part and edges of the network, and a differentiated service (Diff-Serv) model is utilized at the core of the network. In the differentiated service (Diff-Serv) model, the effect of QoS guarantee is unpredictable because only priority level guarantee is set as a QoS guarantee. Therefore, an independent bearer control layer is introduced into the Diff-Serv of backbone networks, and a set of special Diff-Serv QoS signaling mechanism is established. In other words, a resource management layer is established for the Diff-Serv, to manage the topology resources of the networks. The Diff-Serve for resource management is referred to as the Diff-Serv model with an independent bearer control layer.

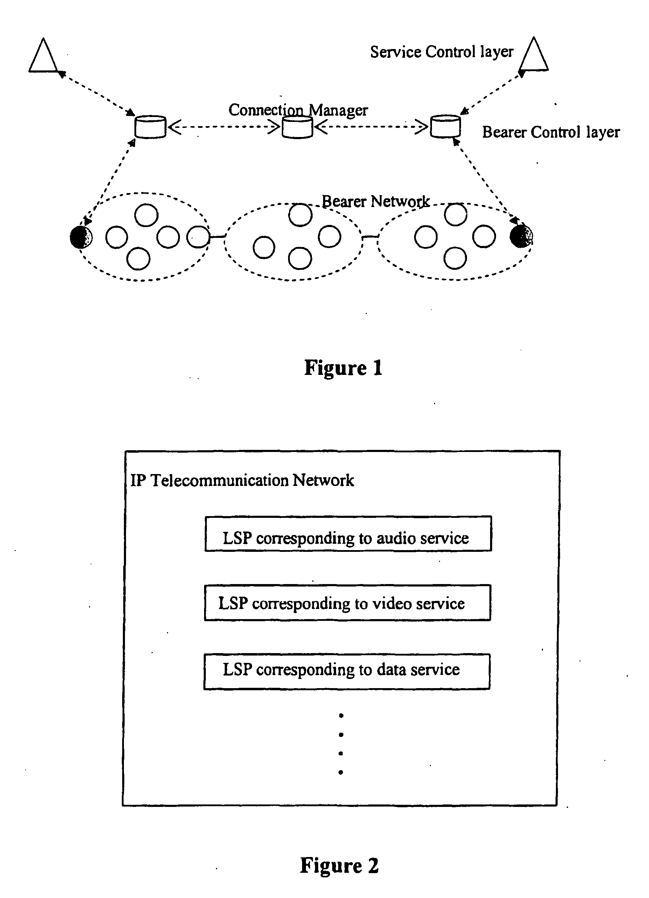

In the Diff-Serv model with an independent bearer control layer, management rules and network topology are configured in a connection manager (CM) (including a bandwidth broker or a QoS server or a QoS resource manager), in order to allocate resources for service bandwidth applications of users. As shown in Figure 1, the service bandwidth application requests from users and the results of the service bandwidth application requests, as well as the path information allocated by the CM for service applications, etc., are transmitted by signaling between the bearer network control servers of management domains. Usually, a route table is simulated for each Core Network-device (CN) on the CM, in order to implement the intra-domain route selection of every CM in the bearer control layer, as well as the service routing. The resource requests of each specific service type (i.e., the specific traffic flow) are bound with a series of Label Switch Path (LSP). In other words, the resources of the corresponding LSPs are utilized. The resources of the corresponding LSPs as well as other resources are released when a call is ended.

The particular process is as follows: the bearer control layer determines the path of a service flow of a user when the bearer control layer processes a service bandwidth application of the user. The connection manager then notifies an edge router to forward the service flow along the specified path. The bearer network usually establishes an LSP along the path of the service flow specified by bearer control layer in a resource reservation manner by using the Multiple Protocol Label Switch (MPLS) technique, and establishes an end-to-end LSP by using the route showing mechanism of Resource Reservation Protocol-Traffic Engineering (RSVP-TE) or Constraint-based Label Distribution Protocol (CR-LDP).

In the related art, another solution for resource management employs a QoS server as the QoS management unit in a network. In implementation, a policy server, a directory server and a network management monitoring server matched with the QoS server are also included in the solution. The policy server is adapted to set parameters of related routers and configure the related routers according to the policy configuration information such as the information about the QoS server and management interfaces. The directory server is a unified and concentrated database for storing network device configuration information, user information and QoS information. The network management monitoring server is responsible for collecting information such as block state of routers and links of the bearer network, etc.. The information may be used as a reference for the QoS server in selecting route for service applications.

The QoS server is responsible for allocating a bearer route satisfying the QoS requirements based on the network topology and resource condition for QoS requests of services. Therefore, it is necessary to preset the topology and bandwidth condition in the QoS server and pre-configure rules for route selection. When a service server sends a bandwidth request to the QoS server, the QoS server records the bandwidth request of the call, allocates a bearer route according to the QoS requirements, the current topology and resource condition of the bearer network for the bandwidth request, and returns the result of allocation to the service server.

In addition, the QoS server may send an LSP policy modification command to the policy server according to the bandwidth occupation condition of the service. The policy server then configures an edge router according to the LSP policy modification command from the QoS server. The edge router therefore reestablishes or adjusts the LSP, using the route showing technique of MPLS LSP, according to the path specified by the QoS server.

In independently operated networks, the above described solutions implement QoS resource management for various traffic flows. Thus, when a user performs a service in a network, the user may apply for QoS resources for the service. At present, in the implementations of the above described solutions, when requesting QoS resources, one service connection is needed to be established for each service flow so as to request the QoS resources. If a communication process contains multiple service flows applying for QoS resources, it is necessary to establish multiple service connections for exchanging signaling based on the service connections, so as to implement QoS resource applications of the multiple service flows.

As can be seen, in the above described solutions for resource applications of various service flows, the amount of the signaling exchanged is large. Accordingly, it will take a relatively long time for resource applications in one communication process.
Patent Application No. US 2004/215817 Al (QING WU [CN] ET AL, 28 October 2004) discloses a method for providing guaranteed Quality of Services (QoS) in an IP network. A bearer control layer consists of control managers each of which manages resources and route selection of a service bearer logic network. After receiving a request of route selection and resources application from a service control layer, the control manager of the bear control layer will select route for this request in the service bearer logic network.
Patent Application No. WO 99/30450 A (PACKETEER INC [US], 17 June 1999) discloses a method for end to end explicit rate control through a plurality of heterogeneous internet-worked networking topologies in a packet telecommunications environment. Individual flow demands of all flows to be routed through a particular partition are added together to form an Aggregate Rate Demand.
Document "NGN Functional Architecture; Resource and Admission Control Subsystem (RACS); Release 1" discloses a functional architecture for the Resource and Admission Control Sub-System, particularly discloses Application Functions related to controlling bearer resources. The Application Function requests resources for media flows belonging to multiple application sessions within the same resource request.

### Summary of the Invention

The invention provides a method for implementing resource applications of multiple service flows, to accomplish the resource applications of multiple service flows in one service connection, so as to reduce the number of signaling to be exchanged during the resource applications of the multiple service flows, and to reduce the time of the resource applications.

The invention provides the following technical solutions:

The invention provides a method for implementing resource applications of multiple service flows. The method includes:
receiving, by a connection manager (CM), a connection resource request message including resource applications of at least two service flows;
allocating paths and reserving resources for the service flows by the CM;
sending, by the CM, the paths allocated for the service flows and resources reserved for the service flows to an edge router of a bearer network accessed by the service flows; and
determining an inter-domain route and a next hop connection manager for each of the service flows, and sending the connection resource request message of the service flows to the next hop connection manager.

Optionally,
the connection resource request message of the at least two service flows are sent to the CM by a core network device of the bearer network via a call agent.

Optionally, the method includes:
determining, by the CM, an edge router or a border router of a CM domain through which the service flows pass according to address information saved in the CM;
allocating paths and reserving resources for the service flows in the CM domain based on the edge router or the border router.

The paths may be Label Switch Paths.

The paths allocated for the service flows and resources reserved for the service flows may be saved in the CM.

Optionally, different inter-domain paths and different/identical next-hop CMs may be determined for the service flows, the connection resource request messages of the service flows are sent to the different/identical next-hop CMs via the different inter-domain paths; or
a same inter-domain path and a same next-hop CM may be determined for the service flows, the connection resource request message containing information of the service flows is sent to the same next-hop CM via the same inter-domain path.

The method may also include:
returning connection resource acknowledgement responses to CMs through which the service flows pass, until the connection resource acknowledgement responses reach the call agent, after the connection resource request message of the service flows contained in a service connection reaches a destination CM and the destination CM accomplishes path allocation and resource reservation.

The method may also include:
initiating, by a source CM, a flow mapping command, and delivering the paths allocated for the service flows and resources reserved for the service flows to the edge router, when the source CM receives the connection resource acknowledgement responses of the service flows.

The service flows correspond to a same destination CM, or different destination CMs.

As can be seen, in the above technical solutions, resource applications of multiple service flows may be accomplished in one service connection, thereby providing support for rich QoS services of the application layer, reducing the time of signaling exchange between devices, saving the network traffic and the time of resource applications. With the method according to the invention, in the case that one communication process contains multiple service flows applying for QoS resources, the time for establishing signaling connection may be reduced significantly, and the amount of signaling exchanged during resource application may be decreased.

### Brief Description of the Drawings

Figure 1 is a schematic diagram showing the network module of an independent bearer control layer;

Figure 2 is a schematic diagram showing the mapping relationship between types of services and the LSPs bearing the services;

Figure 3 shows a flow A of a method according to the invention;

Figure 4 is a flow chart showing resource applications in one service connection as shown in Figure 3;

Figure 5 shows a flow B of a method according to the invention;

Figure 6 is a flow chart showing resource applications in one service connection as shown in Figure 5.

### Detailed Description of the Embodiments

In a full service bearing Internet Protocol (IP) telecommunication network, services with various QoS requirements are usually borne over various Label Switch Paths (LSPs). The connection manager is required to save information about the mapping relationship between the services and the LSPs bearing the services. As shown in Figure 2, the audio service, the video service, the internet services, and the like, correspond to different LSPs respectively. In other words, different types of services are transferred in the network via different LSPs, so as to provide different levels of QoS guarantee for the different types of services.

Thus, in the full service bearing IP telecommunication network, there may be the case that one communication process needs to implement QoS resource applications for multiple service flows. The invention is to reduce the number of exchanged signaling in the network in this case, therefore decrease the time cost on the resource applications.

In the invention, resource applications for different service flows are performed simultaneously on connection servers (CMs) during one service connection. Therefore, in the network, resources for different service flows are provided with different levels of QoS guarantee.

In other words, one or more resource requests, having the same source address and destination address, as well as different bandwidth requirements, may be accomplished in one resource application according to the invention. A message indicating success of the resource application is returned only when each of the path resource applications for the service flows is successful per hop. During the resource application, when initiating a resource request to a next hop CM, a resource request message may be sent to the same CM or multiple CMs to request the resources of the service flows.

In the invention, the number of the service flows requesting resources at the same time may be set based on the hardware performance of devices.

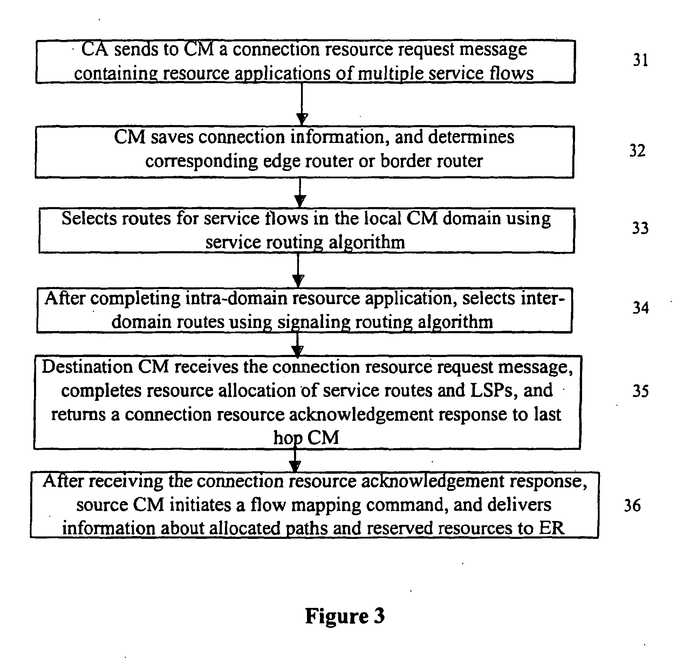

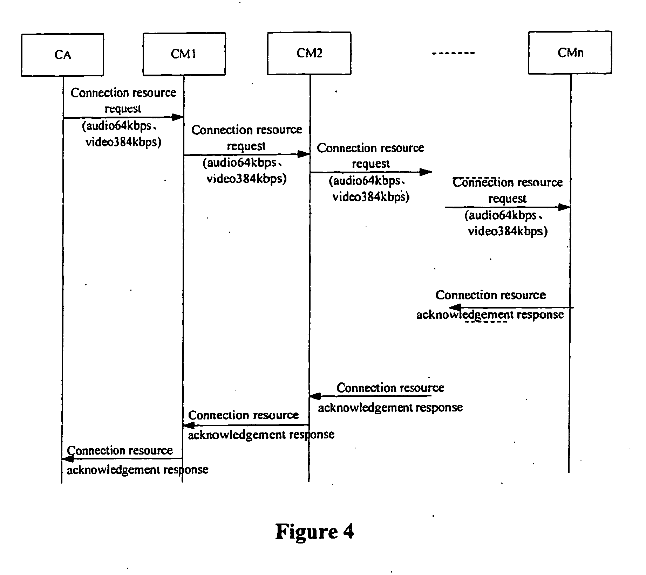

Figure 3 and Figure 4 show an implementation of a method according to the invention. In Figure 4, different service flows are required to pass through the same CMs. In other words, Figure 4 shows a process of resource application allowing intra-domain divergence and inter-domain convergence. This solution facilitates the network planning and management, and is applicable to medium-to-large scale of networks.

The procedure as shown in Figure 3 and Figure 4 is as follows:

Step 31: a call agent (CA) sends a connection resource request message to a CM, the connection resource request message contains resource applications for multiple service flows.

In an example, the connection resource request message may include a resource application for an audio service and a resource application for a video service. The service flows of the audio service and the video service correspond to different resource application amounts of bandwidth. The bandwidth applied for the audio service is 64 kbps, and the bandwidth applied for the video service is 483 kbps.

Step 32: when receiving the connection resource request message, the CM saves connection information of the service flows, and determines the information of edge routers (ERs) or border routers (BRs) of the service flows.

If the CM is a source CM, the CM determines the home ERs of the source IP addresses of the service flows according to the source IP address information stored in quintuples.

If the CM is a non-source CM, the CM determines the address sequence of an ingress BR of local CM domain. For example, in a hop-by-hop routing algorithm, the ingress BR of the local CM domain is determined after the last hop CM selects an inter-domain LSP. In other words, the egress router of the inter-domain LSP is the ingress BR of the local CM domain.

Step 33, the CM selects routes, i.e., allocates paths and reserves resources, for the service flows using a service routing algorithm in the local CM domain.

As in the above example, in this step, the CM firstly applies for intra-domain LSP resource for the first type of service, i.e., the audio service, allocates bandwidth after an idle LSP capable of bearing the audio service is found, and records the information. Then, the CM applies for intra-domain LSP resource for the second type of service, i.e., the video service, finds an idle LSP for the video service, allocates bandwidth and records the information.

Then, the CM allocates routes and resources hop by hop in the topology of the CM in like manner. It should be noted that, when selecting routes and allocating resources for different service flows in the domain, the same sequence of Core Network-devices (CNs) may be used, because the starting points of the service connections are the same ER. If there is no LSP suitable for a service flow between the CNs, a different sequence of CNs in the domain may be used. In other words, the LSPs passing through different devices may be selected for different service flows in a CM domain.

Step 34: after the intra-domain resource application is completed, the CM selects inter-domain routes using the signaling routing algorithm.

For instance, the CM initiates a QoS resource request to the next hop CM using the hop-by-hop algorithm, the QoS resource request includes the address of the next hop CM and the egress BR corresponding to an LSP set going out of the domain, in addition to the QoS parameters and service type, etc..

As in the above example, the LSP set includes an LSP#1 of audio type and an LSP#2 of video type. The LSP#1 and the LSP#2 may have a same egress BR, or may have different egress BRs. However, the two LSPs have a same next hop CM.

All the CMs through which the service flows pass, except the destination CM, are required to execute the procedure from step 32 to step 34, until the connection resource request message reaches the destination CM.

Step 35, after receiving the connection resource request message, the destination CM completes the allocation of service routes and LSP resources, and returns a resource acknowledgement response to its last hop CM.

Each of the CMs, except the source CM, sends the LSP resources returned by the next hop CM and the LSP resources of the each of the CMs to the last hop CM using the resource acknowledgement response, until the resource acknowledgement response reaches the source CM.

Step 36: After receiving the resource acknowledgement response, the source CM initiates a flow mapping command, and delivers to the ER the information of the allocated paths and reserved resources including session ID (identification), information of multiple service flows, QoS parameters, traffic descriptor and label stack of whole path, etc..

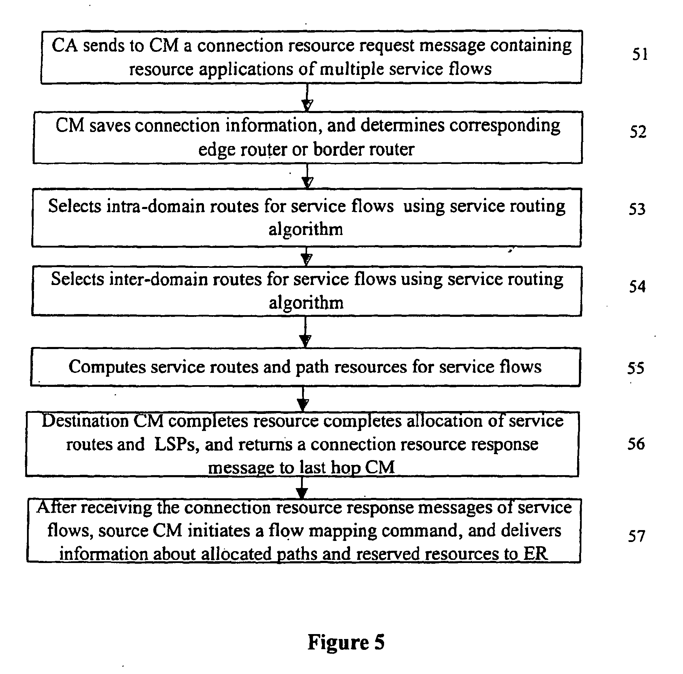

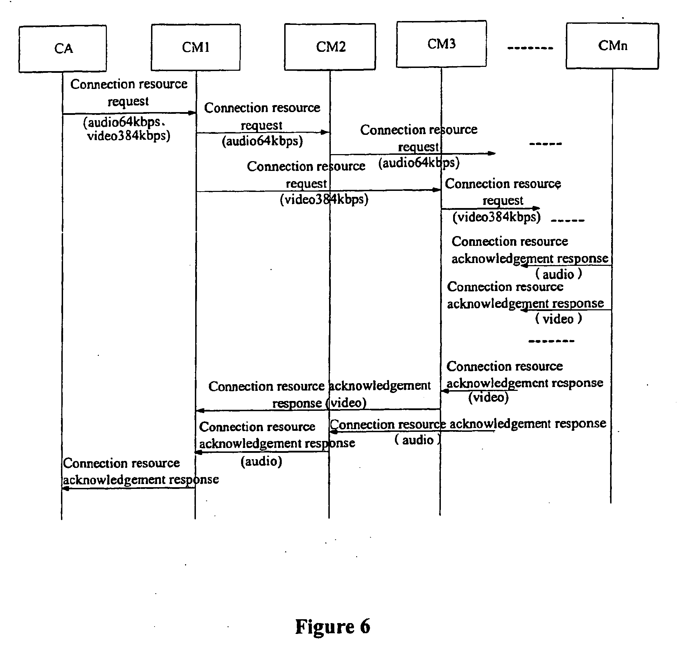

Figure 5 and Figure 6 show another implementation of a method according to the invention. In the implementation as shown in Figure 5 and Figure 6, the service flows are not required to pass through the same CMs, however, the service flows are required to have the same source CM and the same destination CM. As shown in Figure 5 and Figure 6, when a CA sends a connection resource request message to a CM, the subsequent processing procedure is as follows:

Step 51: The CA sends connection resource request messages to a CM, the connection resource request messages contain resource applications for multiple service flows.

Similarly, the connection resource request messages may include a resource application for an audio service and a resource application for a video service.

Step 52: when receiving the connection resource request messages, the CM saves connection information of the service flows, and determines information of edge routers (ERs) or border routers (BRs) of the service flows.

If the CM is a source CM, the CM determines the home ERs of the source IP addresses of the service flows according to the source IP address information stored in quintuples.

If the CM is a non-source CM, the CM determines the address of an ingress BR of local CM domain. For example, in the hop-by-hop routing algorithm, the ingress BR of the local CM domain is determined after the last hop CM selects an inter-domain LSP. In other words, the egress router of the inter-domain LSP is the ingress BR of the local CM domain.

Step 53: the CM selects routes, i.e., allocates paths and reserves resources, for the service flows using the service routing algorithm in the local CM domain.

As in the above example, the CM firstly applies for intra-domain LSP resource for the first type of service, i.e., the audio service, allocates bandwidth after an idle LSP capable of bearing the audio service is found, and records the information. Then, the CM applies for intra-domain LSP resource for the second type of service, i.e., the video service, finds an idle LSP for the video service, allocates bandwidth and records the information.

Then, the CM allocates routes and resources hop by hop in the topology of the CM in like manner. It should be noted that, when selecting routes and allocating resources for different service flows in the domain, the same sequence of Core Network-devices (CNs) may be used, because the starting points of the service connections are the same ER. If there is no LSP suitable for a service flow between the CNs, a different sequence of CNs in the domain may be used.

The procedure from step 51 to step 53 is similar to that from 31 to 33 as shown in Figure 3, the difference lies in the subsequent procedure: the connection resource request messages corresponding to different service flows may reach the destination CM, passing through different CMs.

Step 54: after the intra-domain resource application is completed, the CM select inter-domain routes for the service flows using the signaling routing algorithm.

For instance, the CM initiates a QoS resource request to the next hop CM using the hop-by-hop algorithm, the QoS resource request includes the address of the next hop CM and egress BRs corresponding to LSP sets going out of the domain, in addition to the QoS parameters and service type, etc.. The egress BRs corresponding to different service flows may be a same BR, or may be different BRs. When the egresses BRs are different, the opposite BRs may correspond to a same CM, or may correspond to different CMs. Figure 6 shows an example of different CMs.

Step 55: the CM computes service routes and path resources for the service flows.

All the CMs, except the destination CM, are required to execute repeatedly the procedure from step 52 to step 54, until the connection resource request messages of all the service flows reach the destination CM.

Step 56: the destination CM completes the allocation of service routes and LSP resources, and then returns resource acknowledgement responses to its last hop CM.

Each of the CMs, except the source CM, sends the LSP resources returned by the next hop CM and the LSP resources of the each of the CMs to the last hop CM using the resource acknowledgement responses, until the resource acknowledgement responses reach the source CM.

Step 57: After receiving the resource acknowledgement responses corresponding to the service flows, i.e., the resource acknowledgement responses corresponding to all the service flows in the connection, the source CM initiates a flow mapping command, and delivers to the ER the information of the allocated paths and reserved resources including session ID (identification), information of multiple service flows, QoS parameters, traffic descriptor and label stack of whole path, etc..

In the invention, if one service connection is a point-to-point communication, multiple service flows are required to reach the same destination CM. If one service connection is a point-to-multi-points communication, multiple service flows are allowed to be of same service types (e.g., audio flow, video flow, etc.), and the multiple service flows are allowed to have different destination CMs. Different service flows have a same source CM, and are allowed to have different intermediate CMs. This is a connection resource application process allowing both intra-domain divergence and inter-domain divergence. This connection resource application process has a higher requirement for network planning and management, and utilizes a relatively complex technique for the source CM and the destination CM, as well as a relatively simple technique for the intermediate CMs. This connection resource application process is applicable to small-to-medium scale of networks.

Though some embodiments of the present invention are described above, the present invention shall not be limited thereto. It shall be recognized by a person of ordinary skill in the art that various modifications and variations readily made thereto in light of the disclosure of the invention shall be covered within the protection scope of the present invention as defined by the accompanying claims.

## Claims

1. A method for implementing resource applications of multiple service flows, comprising:
receiving, by a connection manager, CM, a connection resource request message comprising resource applications of at least two service flows (31, 51);
allocating paths and reserving resources for the service flows by the connection manager (33, 53);
sending, by the connection manager, CM, the paths allocated for the service flows and resources reserved for the service flows to an edge router, ER of a bearer network accessed by the service flows;
determining an inter-domain route and a next-hop connection manager for each of the service flows, and sending the connection resource request message of the service flows to the next-hop connection manager (35, 56).

2. The method for implementing resource applications of multiple service flows according to claim 1, wherein
the connection resource request message of the at least two service flows are sent to the connection manager, CM by a core network device of the bearer network via a call agent.

3. The method for implementing resource applications of multiple service flows according to claim 1 or 2, wherein the allocating paths and reserving resources for the service flows further comprises:
determining an edge router, ER or a border router of a connection manager domain through which the service flows pass according to address information saved in the connection manager;
allocating paths and reserving resources for the service flows in the connection manager domain based on the edge router ER or the border router.

4. The method for implementing resource applications of multiple service flows according to claim 3, wherein
the said paths are Label Switch Paths.

5. The method for implementing resource applications of multiple service flows according to claim 4, wherein
the paths allocated for the service flows and resources reserved for the service flows are saved in the connection manager, CM.

6. The method for implementing resource applications of multiple service flows according to claim 1, wherein
different inter-domain paths and different/identical next-hop connection managers are determined for the service flows, the connection resource request messages of the service flows are sent to the different/identical next-hop connection managers via the different inter-domain paths; or
a same inter-domain path and a same next-hop connection manager are determined for the service flows, the connection resource request message containing information of the service flows is sent to the same next-hop connection manager via the same inter-domain path.

7. The method for implementing resource applications of multiple service flows according to claim 3, further comprising:
returning connection resource acknowledgement responses to connection managers through which the service flows pass, until the connection resource acknowledgement responses reach a source connection manager, after the connection resource request message of the service flows contained in a service connection reaches a destination connection manager and the destination connection manager, CM performs path allocation and resource reservation.

8. The method for implementing resource applications of multiple service flows according to claim 7, further comprising:
initiating, by a source connection manager, a flow mapping command, and delivering the paths allocated for the service flows and resources reserved for the service flows to the edge router, ER of the bearer network accessed by the service flows, when the source connection manager, CM receives the connection resource acknowledgement responses of the service flows (36; 57).

9. The method for implementing resource applications of multiple service flows according to claim 7, wherein
the service flows correspond to a same destination connection manager, CM, or different destination connection managers CM.

## Patentansprüche

1. Verfahren zum Implementieren von Betriebsmittelanwendungen mehrerer Dienstflüsse, das Folgendes umfasst:
Empfangen durch einen Verbindungsmanager, CM, einer Verbindungsbetriebsmittel-Anforderungsnachricht, die die Betriebsmittelanwendungen von wenigstens zwei Dienstflüssen (31, 51) umfasst;
Zuteilen von Wegen und Reservieren von Betriebsmitteln für die Dienstflüsse durch den Verbindungsmanager (33, 53);
Senden durch den Verbindungsmanager, CM, der für die Dienstflüsse zugeteilten Wege und der für die Dienstflüsse reservierten Betriebsmittel an einen Edge-Router, ER, eines Trägernetzes, auf das durch die Dienstflüsse zugegriffen wird;
Bestimmen eines Zwischenbereichsweges und eines Verbindungsmanagers für den nächsten Sprung für jeden der Dienstflüsse und Senden der Verbindungsbetriebsmittel-Anforderungsnachricht der Dienstflüsse an den Verbindungsmanager (35, 56) für den nächsten Sprung.

2. Verfahren zum Implementieren von Betriebsmittelanwendungen mehrerer Dienstflüsse nach Anspruch 1, wobei
die Verbindungsbetriebsmittel-Anforderungsnachricht der wenigstens zwei Dienstflüsse durch eine Kernnetzvorrichtung des Trägernetzes über einen Anrufagenten an den Verbindungsmanager, CM, gesendet wird.

3. Verfahren zum Implementieren von Betriebsmittelanwendungen mehrerer Dienstflüsse nach Anspruch 1 oder 2, wobei das Zuteilen von Wegen und das Reservieren von Betriebsmitteln für die Dienstflüsse ferner Folgendes umfasst:
Bestimmen eines Edge-Routers, ER, oder eines Grenz-Routers eines Verbindungsmanager-Bereichs, durch den die Dienstflüsse hindurchgehen, in Übereinstimmung mit den Adresseninformationen, die in dem Verbindungsmanager gesichert sind;
Zuteilen von Wegen und Reservieren von Betriebsmitteln für die Dienstflüsse in dem Verbindungsmanager-Bereich basierend auf dem Edge-Router, ER, oder dem Grenz-Router.

4. Verfahren zum Implementieren von Betriebsmittelanwendungen mehrerer Dienstflüsse nach Anspruch 3, wobei
die Wege Label-Switch-Paths sind.

5. Verfahren zum Implementieren von Betriebsmittelanwendungen mehrerer Dienstflüsse nach Anspruch 4, wobei
die für die Dienstflüsse zugeteilten Wege und die für die Dienstflüsse reservierten Betriebsmittel im Verbindungsmanager, CM, gesichert sind.

6. Verfahren zum Implementieren von Betriebsmittelanwendungen mehrerer Dienstflüsse nach Anspruch 1, wobei
für die Dienstflüsse verschiedene Zwischenbereichswege und verschiedene/völlig gleiche Verbindungsmanager für den nächsten Sprung bestimmt werden, wobei die Verbindungsbetriebsmittel-Anforderungsnachrichten der Dienstflüsse über die verschiedenen Zwischenbereichswege an die verschiedenen/völlig gleichen Verbindungsmanager für den nächsten Sprung gesendet werden; oder
derselbe Zwischenbereichsweg und derselbe Verbindungsmanager für den nächsten Sprung für die Dienstflüsse bestimmt werden, wobei die Verbindungsbetriebsmittel-Anforderungsnachricht, die die Informationen über die Dienstflüsse enthält, über denselben Zwischenbereichsweg an denselben Verbindungsmanager für den nächsten Sprung gesendet wird.

7. Verfahren zum Implementieren von Betriebsmittelanwendungen mehrerer Dienstflüsse nach Anspruch 3, das ferner Folgendes umfasst:
Zurückschicken von Verbindungsbetriebsmittel-Quittungsantworten an die Verbindungsmanager, durch die die Dienstflüsse hindurchgehen, bis die Verbindungsbetriebsmittel-Quittungsantworten einen Quell-Verbindungsmanager erreichen, nachdem die Verbindungsbetriebsmittel-Anforderungsnachricht der Dienstflüsse, die in einer Dienstverbindung enthalten sind, einen Ziel-Verbindungsmanager erreicht hat und der Ziel-Verbindungsmanager, Ziel-CM, die Wegzuteilung und die Betriebsmittelreservierung ausgeführt hat.

8. Verfahren zum Implementieren von Betriebsmittelanwendungen mehrerer Dienstflüsse nach Anspruch 7, das ferner Folgendes umfasst:
Initiieren durch einen Quell-Verbindungsmanager eines Flussabbildungsbefehls und Zustellen der für die Dienstflüsse zugeteilten Wege und der für die Dienstflüsse reservierten Betriebsmittel zu dem Edge-Router, ER, des Trägernetzes, auf das durch die Dienstflüsse zugegriffen wird, wenn der Quell-Verbindungsmanager, Quell-CM, die Verbindungsbetriebsmittel-Quittungsantworten der Dienstflüsse (36; 57) empfängt.

9. Verfahren zum Implementieren von Betriebsmittelanwendungen mehrerer Dienstflüsse nach Anspruch 7, wobei
die Dienstflüsse demselben Ziel-Verbindungsmanager, Ziel-CM, oder verschiedenen Ziel-Verbindungsmanagern, Ziel-CM, entsprechen.

## Revendications

1. Procédé de mise en oeuvre d'applications de ressources de flux de service multiples, comprenant :
la réception, par un gestionnaire de connexions, CM, d'un message de requête de ressources de connexion comprenant des applications de ressources d'au moins deux flux de service (31, 51) ;
l'attribution de chemins et la réservation de ressources des flux de service par le gestionnaire de connexions (33, 53) ;
l'envoi, par le gestionnaire de connexions, CM, des chemins attribués aux flux de service et des ressources réservées pour les flux de service à un routeur limitrophe, ER, d'un réseau de support sollicité par les flux de service ;
la détermination d'une route inter-domaines et d'un gestionnaire de connexions de saut suivant pour chacun des flux de service, et l'envoi du message de requête de ressources de connexion des flux de service au gestionnaire de connexions de saut suivant (35, 36).

2. Procédé de mise en oeuvre d'applications de ressources de flux de service multiples selon la revendication 1, dans lequel
le message de requête de ressources de connexion des au moins deux flux de service est envoyé au gestionnaire de connexions, CM, par un dispositif de réseau coeur du réseau de support par l'intermédiaire d'un agent d'appels.

3. Procédé de mise en oeuvre d'applications de ressources de flux de service multiples selon la revendication 1 ou 2, dans lequel l'attribution de chemins et la réservation de ressources pour les flux de service comprennent en outre :
la détermination d'un routeur limitrophe, ER, ou d'un routeur frontière d'un domaine de gestionnaire de connexions à travers lequel les flux de service passent en fonction d'informations d'adresse sauvegardées dans le gestionnaire de connexions ;
l'attribution de chemins et la réservation de ressources pour les flux de service dans le domaine de gestionnaire de connexions en fonction du routeur limitrophe, ER, ou du routeur frontière.

4. Procédé de mise en oeuvre d'applications de ressources de flux de service multiples selon la revendication 3, dans lequel
lesdits chemins sont des Chemins à Commutation d'Etiquettes.

5. Procédé de mise en oeuvre d'applications de ressources de flux de service multiples selon la revendication 4, dans lequel
les chemins attribués aux flux de service et les ressources réservées pour les flux de service sont sauvegardés dans le gestionnaire de connexions, CM.

6. Procédé de mise en oeuvre d'applications de ressources de flux de service multiples selon la revendication 1, dans lequel :
des chemins inter-domaines différents et des gestionnaires de connexions de saut suivant différents/identiques sont déterminés pour les flux de service, les messages de requête de ressources de connexion des flux de service sont envoyés aux gestionnaires de connexions de saut suivant différents/identiques par l'intermédiaire des chemins inter-domaines différents ; ou
un même chemin inter-domaines et un même gestionnaire de connexions de saut suivant sont déterminés pour les flux de service, le message de requête de ressources de connexion contenant des informations des flux de service est envoyé au même gestionnaire de connexions de saut suivant par l'intermédiaire du même chemin inter-domaines.

7. Procédé de mise en oeuvre d'applications de ressources de flux de service multiples selon la revendication 3, comprenant en outre :
le renvoi de réponses d'acquittement de ressources de connexion aux gestionnaires de connexions par lesquels les flux de service passent, jusqu'à ce que les réponses d'acquittement de ressources de connexion parviennent à un gestionnaire de connexions source, après que le message de requête de ressources de connexion des flux de service contenus dans une connexion de service parvient à un gestionnaire de connexions destinataire et au gestionnaire de connexions, CM, destinataire exécute une attribution de chemins et une réservation de ressources.

8. Procédé de mise en oeuvre d'applications de ressources de flux de service multiples selon la revendication 7, comprenant en outre :
le lancement, par un gestionnaire de connexions source, d'une commande de mappage de flux, et la délivrance des chemins attribués aux flux de service et des ressources réservées pour les flux de service au routeur limitrophe, ER, du réseau de support sollicité par les flux de service, quand le gestionnaire de connexions, CM, source reçoit les réponses d'acquittement de ressources de connexion des flux de service (36 ; 57).

9. Procédé de mise en oeuvre d'applications de ressources de flux de service multiples selon la revendication 7, dans lequel
les flux de service correspondent à un même gestionnaire de connexions, CM, destinataire, ou à des gestionnaires de connexions, CM, destinataires différents.
